# EUROPÄISCHE PATENTSCHRIFT

(11) **EP 4 724 394 B1**
(45) Veröffentlichungstag und Bekanntmachung des Hinweises auf die Patenterteilung: **16.09.2026**
(21) Anmeldenummer: 25759103.2
(22) Anmeldetag: 21.08.2025
(51) Int. Cl.: C01C 1/04, B01J 19/00

(54) **VORRICHTUNG UND VERFAHREN ZUR SYNTHESE VON GRÜNEM AMMONIAK**
DEVICE AND METHOD FOR GREEN AMMONIA SYNTHESIS
DISPOSITIF ET PROCÉDÉ DE SYNTHÈSE D'AMMONIAC VERT

(30) Priorität: 26.08.2024 DE 102024124301; 26.08.2024 LU 103367
(43) Veröffentlichungstag der Anmeldung: 15.04.2026
(73) Patentinhaber: thyssenkrupp Uhde GmbH, 44141 Dortmund (DE); thyssenkrupp AG, 45143 Essen (DE)
(72) Erfinder: GORVAL, Evgeni, 44135 Dortmund (DE); KEIL, Bernd, 44141 Dortmund (DE)
(74) Vertreter: thyssenkrupp Intellectual Property GmbH
(86) Internationale Anmeldenummer: PCT/EP2025/073867
(87) Internationale Veröffentlichungsnummer: WO 2026/046825

(56) Entgegenhaltungen:
- EP-A1- 3 819 261
- EP-A1- 4 148 020
- DE-A1- 102021 213 799

## Beschreibung

Die Erfindung betrifft ein Verfahren zur Synthese von Ammoniak umfassend das Bereitstellen von Wasserstoff und das Zuführen des Wasserstoffes zu einem Ammoniaksynthese-Kreislauf, umfassend einen Ammoniakkonverter, in welchem Ammoniak katalytisch synthetisiert wird, einen Zirkulator, welcher dem Ammoniakkonverter ein den Wasserstoff und Stickstoff enthaltendes Edukt-Gasgemisch zuführt und einen Abscheider, in welchem Ammoniak aus einem Produkt-Gasgemisch des Ammoniakkonverters abgeschieden wird. Ferner betrifft die Erfindung eine Vorrichtung zur Synthese von Ammoniak, umfassend: eine Zuführeinrichtung zum Bereitstellen von Wasserstoff, einen Ammoniaksynthese-Kreislauf umfassend einen Ammoniakkonverter zur katalytischen Synthese von Ammoniak, einen Zirkulator zum Zuführen eines Wasserstoff und Stickstoff enthaltenden Edukt-Gasgemischs zu dem Ammoniakkonverter und einen Abscheider zum Abscheiden von Ammoniak aus einem Produkt-Gasgemisch des Ammoniakkonverters.

Bei der herkömmlichen Synthese von Ammoniak aus Wasserstoff und Stickstoff gemäß dem Haber-Bosch Verfahren wird der Wasserstoff häufig durch Dampfreformierung von Kohlenwasserstoffen gewonnen. Die Kohlenwasserstoffe können sicher und für längere Zeiträume zwischengelagert werden, so dass sie zu jeder Zeit in ausreichender Menge zur Verfügung gestellt werden können. Daher kann auch zu jeder Zeit daraus durch Dampfreformierung eine ausreichende Menge an Wasserstoff gewonnen werden. Dies ermöglicht eine herkömmliche Synthese von Ammoniak über längere Zeiträume bei maximaler Auslastung der Syntheseanlage unter kontinuierlicher Verfahrensführung (Volllastbetrieb). Auch eine variable Auslastung der Syntheseanlage unter kontinuierlicher Verfahrensführung ist möglich. So kann der Durchsatz vorübergehend vermindert werden (Teillastbetrieb), ohne dass es zu einer vollständigen Unterbrechung der Verfahrensführung kommt. Unterbrechungen der Synthese sind meist nur nach längeren Zeiträumen der Synthese, häufig erst nach Monaten oder sogar Jahren erforderlich, z.B. für Wartungsarbeiten.

Infolge der allgemeinen Bestrebungen, den Einsatz fossiler Energieträger zu reduzieren oder vollständig zu vermeiden, wurden alternative Verfahren zur Synthese von Ammoniak aus Wasserstoff und Stickstoff gemäß dem Haber-Bosch Verfahren entwickelt, bei denen der Wasserstoff nicht durch Dampfreformierung von Kohlenwasserstoffen, sondern durch Elektrolyse von Wasser gewonnen wird. Der für die Elektrolyse eingesetzte elektrische Strom wird dabei aus erneuerbarer Energie gewonnen, insbesondere aus Windkraft, Wasserkraft, Solarenergie oder Kombinationen davon. Der so gewonnene Wasserstoff wird als "grüner Wasserstoff" bezeichnet.

Erneuerbare Energie ist nicht kontinuierlich in konstanter Menge verfügbar. Insbesondere die Verfügbarkeit von Windkraft und Solarenergie ist erheblichen Schwankungen unterworfen, welche insbesondere vom Wetter und vom Tag-Nacht-Zyklus verursacht werden. Mit den Schwankungen der Verfügbarkeit erneuerbarer Energie schwankt auch die Verfügbarkeit von aus der erneuerbaren Energie gewonnenem elektrischem Strom. Für die Elektrolyse von Wasser sind solche Schwankungen ein untergeordnetes Problem, denn die Leistung moderner Elektrolysezellen kann zeitnah solchen Schwankungen angepasst werden. Im Ergebnis schwankt damit die Verfügbarkeit von Wasserstoff, welcher durch Elektrolyse von Wasser mit elektrischem Strom aus erneuerbarer Energie gewonnen wird, zeitgleich (oder geringfügig zeitlich versetzt) mit der Schwankung der Verfügbarkeit der erneuerbaren Energie.

Anlagen zur Synthese von Ammoniak aus Wasserstoff und Stickstoff nach dem Haber-Bosch Verfahren sind vergleichsweise träge und können kurzfristige Schwankungen der Verfügbarkeit von Wasserstoff nicht oder nur zu einem geringen Teil ausgleichen.

Um zu jeder Zeit eine ausreichende Menge an Wasserstoff zur Verfügung stellen zu können, damit die Anlagen kontinuierlich betrieben werden können, wäre das Zwischenspeichern der erneuerbaren Energie, des daraus erzeugten elektrischen Stroms, oder des damit durch Elektrolyse von Wasser gewonnenen Wasserstoffs erforderlich. In Zeiten geringer Verfügbarkeit erneuerbarer Energie könnte dann auf den jeweiligen Zwischenspeicher zugegriffen werden. Die Größe des Zwischenspeichers müsste ausreichen, um übliche Zeitspannen geringer Verfügbarkeit erneuerbarer Energie zu überbrücken, d.h. ggf. mehrere Tage. Ein Speicher zum Überbrücken derartig langer Zeiträume stellt jedoch einen erheblichen Kostenfaktor dar.

Beim Betrieb von Anlagen zur Synthese von Ammoniak mit grünem Wasserstoff ist es wünschenswert, einen Teillastbetrieb bis zu einer Reduktion auf 10% der Volllast zu ermöglichen, um die Speicherkapazität für grünen Wasserstoff bzw. für die aus erneuerbaren Quellen erzeugte Energie zu minimieren bzw. die Anlagen nicht jedes Mal abschalten zu müssen, wenn die zur Verfügung stehende Leistung an erneuerbarer Energie gering ist. Das Wiederanfahren der Anlage aus dem kalten Zustand ist mit einem hohen Zeitaufwand und dem damit verbundenen Produktionsausfall verbunden. Die besondere Herausforderung bei diesem flexiblen Betrieb in "grünen" Anlagen (diese Herausforderung fehlt bei den konventionellen Anlagen) besteht darin, den Synthesedruck (meist 140-200 bar) in einem engen Bereich konstant zu halten. Während die Druckänderung in den konventionellen Anlagen unproblematisch ist (weil selten), würde sie in den grünen Anlagen mit ihren häufigen Lastwechseln zu einer inakzeptablen Belastung der Anlagen, insbesondere des Ammoniakkonverters, führen. Der Konverter müsste dann für wechselnde Belastungen ausgelegt werden, was zu höheren Anlagenkosten führt.

Darüber hinaus gibt es weitere Herausforderungen, die die Regelung grüner Anlagen zur Synthese von Ammoniak erschweren: So sollte der Volumenstrom in dem Ammoniaksynthese-Kreislauf hoch genug sein, um eine gleichmäßige Strömungsverteilung in den Katalysatorbetten zu gewährleisten. Ansonsten besteht die Gefahr, dass sich im Ammoniakkonverter heiße bzw. kalte Strähnen bilden, die im schlimmsten Fall den Katalysator beschädigen oder zum Erlöschen der Synthesereaktion führen. So ist beispielsweise das in der EP 3 819 261 A1 vorgeschlagene Regelungskonzept für den Betrieb grüner Anlagen zu Ammoniaksynthese problematisch. Bei diesem Regelungskonzept wird der Druck in dem Ammoniaksynthese-Kreislauf durch Öffnen des *Anti-Surge*-Ventils des Rückführkompressors konstant gehalten. Dadurch wird der Volumenstrom in dem Ammoniaksynthese-Kreislauf etwa proportional zur sinkenden Wasserstoffverfügbarkeit reduziert, was bei einer Teillast von unter 50 % zu einer ungleichmäßigen Gasverteilung in den Katalysatorbetten des Ammoniakkonverters führen kann.

Aus EP 4 349 779 A1 ist eine Prozessführung bei der Synthese von Ammoniak bekannt, welche von dem Mengenstrom eines Wasserstoff und Stickstoff umfassenden Make-up-Gases abhängig ist und auf einer auf indirektem Wärmeaustausch basierenden Kühlung zwischen dem ersten Katalysatorbett und dem zweiten Katalysatorbett beruht.

Vor diesem Hintergrund ist es Aufgabe der vorliegenden Erfindung, einen flexiblen und sicheren Betrieb einer grünen Ammoniakanlage bei schwankender Verfügbarkeit von Wasserstoff zu ermöglichen.

Diese Aufgabe wird durch den Gegenstand der Patentansprüche gelöst.

Ein erster Aspekt der Erfindung betrifft ein Verfahren zur Synthese von Ammoniak umfassend:
- Bereitstellen von Wasserstoff und Stickstoff;
- Zuführen des Wasserstoffes und des Stickstoffs zu einem Ammoniaksynthese-Kreislauf, umfassend
   einen Ammoniakkonverter, in welchem Ammoniak katalytisch synthetisiert wird, wobei dem Ammoniakkonverter (4) ein Edukt-Gasgemisch zugeführt wird und ein Produkt-Gasgemisch aus dem Ammoniakkonverter (6) abgeführt wird;
   einen Zirkulator, welcher dem Ammoniakkonverter ein den Wasserstoff und den Stickstoff enthaltendes Edukt-Gasgemisch zuführt; und
   einen Abscheider, in welchem Ammoniak aus einem Produkt-Gasgemisch des Ammoniakkonverters abgeschieden wird;

wobei der Ammoniaksynthese-Kreislauf in einem Volllastbetrieb betrieben wird, in welchem dem Ammoniaksynthese-Kreislauf eine Nenn-Durchflussmenge des Wasserstoffes bereitgestellt wird, und
wobei der Ammoniaksynthese-Kreislauf entweder von dem Volllastbetrieb in einen Teillastbetrieb überführt wird oder von einem Teillastbetrieb in den Volllastbetrieb überführt wird, wobei dem Ammoniaksynthese-Kreislauf in dem Teillastbetrieb eine Durchflussmenge an Wasserstoff bereitgestellt wird, die geringer ist als die Nenn-Durchflussmenge,
wobei in dem Teillastbetrieb ein Bypass-Gasstrom von dem Edukt-Gasgemisch zwischen dem Zirkulator und dem Ammoniakkonverter abgezweigt und dem Produkt-Gasgemisch zwischen dem Ammoniakkonverter und dem Abscheider zugeführt wird.

Im Verlauf des erfindungsgemäßen Verfahrens ändert sich die momentane Verfügbarkeit des Wasserstoffs, beispielsweise durch äußere Einflüsse wie z.B. Tag-Nacht-Zyklus, Wetter, etc. Ist die momentane Verfügbarkeit des Wasserstoffs hoch, so kann der Ammoniaksynthese-Kreislauf im Volllastbetrieb betrieben werden. Wenn sich die Verfügbarkeit des Wasserstoffs reduziert, wird der Ammoniaksynthese-Kreislauf in einem Teillastbetrieb betrieben. Unter einem Teillastbetrieb wird im Sinne der vorliegenden Erfindung ein Betrieb verstanden, bei dem eine Durchflussmenge an Wasserstoff bereitgestellt wird, die geringer ist als die Nenn-Durchflussmenge, bevorzugt geringer ist als 90% der Nenn-Durchflussmenge, alternativ bevorzugt geringer ist als 80% der Nenn-Durchflussmenge, alternativ bevorzugt geringer ist als 70% der Nenn-Durchflussmenge. Bevorzugt ist die Durchflussmenge im Teillastbetrieb größer als 5 % der Nenn-Durchflussmenge, besonders bevorzugt größer als 10% der Nenn-Durchflussmenge. Gemäß der Erfindung ist vorgesehen, dass in dem Teillastbetrieb ein Bypass-Gasstrom von dem Edukt-Gasgemisch zwischen dem Zirkulator und dem Ammoniakkonverter abgezweigt und dem Produkt-Gasgemisch zwischen dem Ammoniakkonverter und dem Abscheider zugeführt wird.

Der Bypass-Gasstrom überbrückt den Ammoniakkonverter. Hierdurch wird zwar der Volumenstrom des Edukt-Gasgemischs reduziert. Dies trägt aber dazu bei, dass der Druck am Eingang des Ammoniakkonverters im Wesentlichen konstant gehalten werden kann. Große Laständerungen können ohne unannehmbar hohe Druckschwankungen und extremen *Turndown* in der Kälteanlage geregelt werden, ohne dass zusätzliche Hardware erforderlich ist. Insofern kann ein flexibler und sicherer Betrieb einer grünen Ammoniakanlage mit Schwankungen der Verfügbarkeit von Wasserstoff ermöglicht werden. Derartige Schwankungen können auch in Pipelines oder Anlagen zur Herstellung von schwarzem, grauem oder braunem Wasserstoff auftreten.

Das erfindungsgemäße Verfahren ist insbesondere geeignet, den sicheren Betrieb bei erhöhter Ammoniakkonzentration in dem Edukt-Gasgemisch und/oder erhöhter Temperatur am Eingang des Ammoniakkonverters zu ermöglichen. Eine erhöhte Temperatur am Eingang des Ammoniakkonverters kann den Umsatz verschlechtern. Hierdurch kann der Volumenstrom des Edukt-Gasgemischs in dem Ammoniaksynthese-Kreislauf bei reduzierter Verfügbarkeit von Wasserstoff, beispielsweise bei einer Reduktion auf einen Wert unterhalb von 90% der Nennlast, bevorzugt auf einen Wert unterhalb von 80% der Nennlast, alternativ bevorzugt auf einen Wert unterhalb von 70% der Nennlast, alternativ bevorzugt auf einen Wert unterhalb von 50% der Nennlast, aufrechterhalten werden. Etwaige negative Auswirkungen eines zu geringen Volumenstroms in dem Ammoniakkonverter können auf diese Weise verhindert werden. Ein derartiges Verfahren ermöglicht eine Regelung der Synthese von Ammoniak bis zu sehr kleinen Teillasten, beispielsweise auch bei Teillasten von 1-10% der Nennlast, ohne dass die Gefahr einer ungleichmäßigen Durchströmung der Katalysatorbetten besteht.

Bevorzugt ist der Zirkulator als Kompressor ausgebildet.

Bevorzugt erfolgt das Bereitstellen von Wasserstoff mittels erneuerbarer Energien.

### Abzweigen des Bypass-Gasstroms

Nachfolgend sollen vorteilhafte Ausgestaltungen der Erfindung erläutert werden, welche das Abzweigen des Bypass-Gasstroms betreffen:

Gemäß einer vorteilhaften Ausgestaltung der Erfindung ist vorgesehen, dass das Edukt-Gasgemisch mittels eines Gas-Gas-Wärmetauschers vorgewärmt wird, wobei der Gas-Gas-Wärmetauscher einen Wärmeübergang von dem Produkt-Gasgemisch auf das aus dem Zirkulator austretende Edukt-Gasgemisch bereitstellt, wobei in dem Teillastbetrieb der Bypass-Gasstrom von dem Edukt-Gasgemisch zwischen dem Zirkulator und dem Gas-Gas-Wärmetauschers abgezweigt wird.

Gemäß einer alternativen, vorteilhaften Ausgestaltung der Erfindung ist vorgesehen, dass das Edukt-Gasgemisch mittels eines Gas-Gas-Wärmetauschers vorgewärmt wird, wobei der Gas-Gas-Wärmetauscher einen Wärmeübergang von dem Produkt-Gasgemisch auf das aus dem Zirkulator austretende Edukt-Gasgemisch bereitstellt und das mittels des Gas-Gas-Wärmetauschers vorgewärmte Edukt-Gasgemisch mittels eines Erhitzers erhitzt wird, wobei in dem Teillastbetrieb der Bypass-Gasstrom von dem Edukt-Gasgemisch zwischen dem Gas-Gas-Wärmetauscher und dem Erhitzer abgezweigt wird. Der Erhitzer kann beispielsweise als elektrischer Erhitzer ausgebildet sein, aber auch andere Ausgestaltungen sind natürlich möglich. Der Erhitzer kann derart konfiguriert sein, dass er das vorgewärmte Edukt-Gasgemisch nur dann erhitzt, wenn dem Ammoniaksynthese-Kreislauf in dem Teillastbetrieb eine Durchflussmenge an Wasserstoff bereitgestellt wird, die geringer ist als eine vorgegebene Teillast-Durchflussmenge, insbesondere geringer als 20% der Nenn-Durchflussmenge. Die angegebene Durchflussmenge im Teillastbetrieb betrifft die Durchflussmenge, die dem Ammoniaksynthese-Kreislauf von außen, also beispielsweise durch einen Syngas-Kompressor, zugeführt wird.

Gemäß einer alternativen, vorteilhaften Ausgestaltung der Erfindung ist vorgesehen, dass das Edukt-Gasgemisch mittels eines Gas-Gas-Wärmetauschers vorgewärmt wird, wobei der Gas-Gas-Wärmetauscher einen Wärmeübergang von dem Produkt-Gasgemisch auf das aus dem Zirkulator austretende Edukt-Gasgemisch bereitstellt und das mittels des Gas-Gas-Wärmetauschers vorgewärmte Edukt-Gasgemisch mittels eines Erhitzers erhitzt wird, wobei in dem Teillastbetrieb der Bypass-Gasstrom von dem Edukt-Gasgemisch zwischen dem Erhitzer und dem Ammoniakkonverter abgezweigt wird. Der Erhitzer kann beispielsweise als elektrischer Erhitzer ausgebildet sein. Der Erhitzer kann derart konfiguriert sein, dass er das vorgewärmte Edukt-Gasgemisch nur dann erhitzt, wenn dem Ammoniaksynthese-Kreislauf in dem Teillastbetrieb eine Durchflussmenge an Wasserstoff bereitgestellt wird, die geringer ist als eine vorgegebene Teillast-Durchflussmenge, insbesondere geringer als 20% der Nenn-Durchflussmenge.

### Zuführen des Bypass-Gasstroms

Nachfolgend sollen vorteilhafte Ausgestaltungen der Erfindung erläutert werden, welche das Zuführen des Bypass-Gasstroms betreffen. Diese können mit sämtlichen zuvor erläuterten Ausgestaltungen betreffend das Abzweigen des Bypass-Gasstroms kombiniert werden.

Gemäß einer vorteilhaften Ausgestaltung der Erfindung ist vorgesehen, dass das aus dem Ammoniakkonverter austretende Produkt-Gasgemisch einen Dampfüberhitzer durchläuft, wobei in dem Teillastbetrieb der Bypass-Gasstrom dem Produkt-Gasgemisch zwischen dem Ammoniakkonverter und dem Dampfüberhitzer zugeführt wird.

Gemäß einer alternativen, vorteilhaften Ausgestaltung der Erfindung ist vorgesehen, dass das aus dem Ammoniakkonverter austretende Produkt-Gasgemisch einen Abhitzekessel, englisch "waste heat boiler", durchläuft, wobei in dem Teillastbetrieb der Bypass-Gasstrom dem Produkt-Gasgemisch zwischen dem Dampfüberhitzer und dem Abhitzekessel zugeführt wird. Bevorzugt ist vorgesehen, dass das aus dem Ammoniakkonverter austretende Produkt-Gasgemisch zunächst einen Dampfüberhitzer und darauffolgend den Abhitzekessel durchläuft.

Gemäß einer alternativen, vorteilhaften Ausgestaltung der Erfindung ist vorgesehen, dass das aus dem Ammoniakkonverter austretende Produkt-Gasgemisch zunächst einen Dampfüberhitzer, darauffolgend einen Abhitzekessel, englisch "waste heat boiler", darauffolgend einen Gas-Gas-Wärmetauscher durchläuft, wobei in dem Teillastbetrieb der Bypass-Gasstrom dem Produkt-Gasgemisch zwischen dem Abhitzekessel und dem Gas-Gas-Wärmetauscher zugeführt wird.

Als besonders vorteilhaft hat sich eine Ausgestaltung der Erfindung erwiesen, bei welcher das Edukt-Gasgemisch mittels eines Gas-Gas-Wärmetauschers vorgewärmt wird, wobei der Gas-Gas-Wärmetauscher einen Wärmeübergang von dem Produkt-Gasgemisch auf das aus dem Zirkulator austretende Edukt-Gasgemisch bereitstellt und das mittels des Gas-Gas-Wärmetauschers vorgewärmte Edukt-Gasgemisch mittels eines Erhitzers erhitzt wird, wobei in dem Teillastbetrieb der Bypass-Gasstrom von dem Edukt-Gasgemisch zwischen dem Gas-Gas-Wärmetauscher und dem Erhitzer abgezweigt wird; und dass das aus dem Ammoniakkonverter austretende Produkt-Gasgemisch zunächst einen Dampfüberhitzer, darauffolgend einen Abhitzekessel, englisch "waste heat boiler", darauffolgend einen Gas-Gas-Wärmetauscher durchläuft, wobei in dem Teillastbetrieb der Bypass-Gasstrom dem Produkt-Gasgemisch zwischen dem Abhitzekessel und dem Gas-Gas-Wärmetauscher zugeführt wird. Eine derartige Ausgestaltung bietet den Vorteil, dass zwischen der Temperatur des Edukt-Gasgemischs am Abzweigepunkt - zwischen dem Gas-Gas-Wärmetauscher und dem Erhitzer - und der Temperatur des Produkt-Gasgemischs am Zuführpunkt - zwischen dem Abhitzekessel und dem Gas-Gas-Wärmetauscher - nur eine geringe Temperaturdifferenz besteht. Diese Ausgestaltung ist somit energetisch günstig. Der Erhitzer kann derart konfiguriert sein, dass er das vorgewärmte Edukt-Gasgemisch nur dann erhitzt, wenn in dem Teillastbetrieb eine Durchflussmenge an Wasserstoff bereitgestellt wird, die geringer ist als eine vorgegebene Teillast-Durchflussmenge, insbesondere geringer als 20% der Nenn-Durchflussmenge.

Gemäß einer alternativen, vorteilhaften Ausgestaltung der Erfindung ist vorgesehen, dass das Produkt-Gasgemisch mittels eines Gas-Gas-Wärmetauschers und darauffolgend mittels eines Gaskühlers gekühlt wird, wobei der Gas-Gas-Wärmetauscher einen Wärmeübergang von dem Produkt-Gasstrom auf den Edukt-Gasstrom bereitstellt, wobei in dem Teillastbetrieb der Bypass-Gasstrom dem Produkt-Gasgemisch zwischen dem Gas-Gas-Wärmetauscher und dem Gaskühler zugeführt wird.

Gemäß einer alternativen, vorteilhaften Ausgestaltung der Erfindung ist vorgesehen, dass das Produkt-Gasgemisch zunächst mittels eines Gaskühlers und darauffolgend mittels eines Kältetauschers gekühlt wird, wobei der Kältetauscher einen Wärmeübergang von dem Produkt-Gasgemisch auf ein dem Zirkulator zugeführtes Gasgemisch bereitstellt, wobei in dem Teillastbetrieb der Bypass-Gasstrom dem Produkt-Gasgemisch zwischen dem Gaskühler und dem Kältetauscher zugeführt wird. Bevorzugt wird der Gaskühler mit Kühlwasser gekühlt.

Als besonders vorteilhaft hat sich eine Ausgestaltung der Erfindung erwiesen, bei welcher das Edukt-Gasgemisch mittels eines Gas-Gas-Wärmetauschers vorgewärmt wird, wobei der Gas-Gas-Wärmetauscher einen Wärmeübergang von dem Produkt-Gasgemisch auf das aus dem Zirkulator austretende Edukt-Gasgemisch bereitstellt, wobei in dem Teillastbetrieb der Bypass-Gasstrom von dem Edukt-Gasgemisch zwischen dem Zirkulator und dem Gas-Gas-Wärmetauscher abgezweigt wird; und dass das Produkt-Gasgemisch zunächst mittels eines Gaskühlers und darauffolgend mittels eines Kältetauschers gekühlt wird, wobei der Kältetauscher einen Wärmeübergang von dem Produkt-Gasgemisch auf ein dem Zirkulator zugeführtes Gasgemisch bereitstellt, wobei in dem Teillastbetrieb der Bypass-Gasstrom dem Produkt-Gasgemisch zwischen dem Gaskühler und dem Kältetauscher zugeführt wird. Eine derartige Ausgestaltung bietet den Vorteil, dass zwischen der Temperatur des Edukt-Gasgemischs am Abzweigepunkt - zwischen dem Zirkulator und dem Gas-Gas-Wärmetauscher - und der Temperatur des Produkt-Gasgemischs am Zuführpunkt - zwischen dem Gaskühler und dem Kältetauscher - nur eine geringe, insbesondere gar keine, Temperaturdifferenz besteht. Diese Ausgestaltung ist somit energetisch günstig, insbesondere energetisch neutral.

Gemäß einer alternativen, vorteilhaften Ausgestaltung der Erfindung ist vorgesehen, dass das Produkt-Gasgemisch zunächst mittels eines Kältetauschers und darauffolgend mittels eines Kühlers gekühlt wird, wobei der Kältetauscher einen Wärmeübergang von dem Produkt-Gasgemisch auf ein dem Zirkulator zugeführtes Gasgemisch bereitstellt, wobei in dem Teillastbetrieb der Bypass-Gasstrom dem Produkt-Gasgemisch zwischen dem Kältetauscher und dem Kühler zugeführt wird.

Gemäß einer vorteilhaften Ausgestaltung der Erfindung ist vorgesehen, dass das Produkt-Gasgemisch zunächst mittels eines ersten Kühlers und darauffolgend mittels eines zweiten Kühlers gekühlt wird, wobei in dem Teillastbetrieb der Bypass-Gasstrom dem Produkt-Gasgemisch zwischen dem ersten Kühler und dem zweiten Kühler zugeführt wird. Bevorzugt wird das Produkt-Gasgemisch zunächst mittels eines Kältetauschers und darauffolgend mittels des ersten Kühlers gekühlt.

Gemäß einer vorteilhaften Ausgestaltung der Erfindung ist vorgesehen, dass das Produkt-Gasgemisch mittels eines Kühlers gekühlt und darauffolgend einem Abscheider zugeführt wird, wobei in dem Teillastbetrieb der Bypass-Gasstrom dem Produkt-Gasgemisch zwischen dem Kühler und dem Abscheider zugeführt wird. Bevorzugt wird das Produkt-Gasgemisch zunächst mittels eines Kältetauschers, darauffolgend mittels eines ersten Kühlers und darauffolgend mittels des genannten Kühlers als zweiter Kühler gekühlt.

Als besonders vorteilhaft hat sich eine Ausgestaltung der Erfindung erwiesen, bei welcher das Edukt-Gasgemisch mittels eines Gas-Gas-Wärmetauschers vorgewärmt wird, wobei der Gas-Gas-Wärmetauscher einen Wärmeübergang von dem Produkt-Gasgemisch auf das aus dem Zirkulator austretende Edukt-Gasgemisch bereitstellt, wobei in dem Teillastbetrieb der Bypass-Gasstrom von dem Edukt-Gasgemisch zwischen dem Zirkulator und dem Gas-Gas-Wärmetauscher abgezweigt wird; und das Produkt-Gasgemisch mittels eines Kühlers gekühlt und darauffolgend einem Abscheider zugeführt wird, wobei in dem Teillastbetrieb der Bypass-Gasstrom dem Produkt-Gasgemisch zwischen dem Kühler und dem Abscheider zugeführt wird. Eine derartige Ausgestaltung bietet den Vorteil, dass sich die Temperatur des Produkt-Gasgemischs am Zuführpunkt zwischen dem Kühler und dem Abscheider erhöht, wodurch sich die Abscheidung von Ammoniak, NH₃, im Abscheider verringert. Dies führt zu einer erwünschten Erhöhung der Ammoniakkonzentration im Edukt-Gasgemisch am Eintritt in den Ammoniakkonverter. Die erhöhte NH₃-Konzentration verschlechtert den Umsatz im Ammoniakkonverter, so dass sich ein höherer Volumenstrom realisieren lässt. Infolge des erhöhten Volumenstroms kann sich der Umsatz erhöhen. Damit kann das Risiko ungleichmäßiger Strömung in den Katalysatorbetten des Ammoniakkonverters verringert werden. Bevorzugt wird das Produkt-Gasgemisch zunächst mittels eines Kältetauschers, darauffolgend mittels eines ersten Kühlers und darauffolgend mittels des genannten Kühlers als zweiter Kühler gekühlt.

Weitere vorteilhafte Ausgestaltungen der Erfindung werden nachfolgend erörtert.

Gemäß einer vorteilhaften Ausgestaltung der Erfindung ist vorgesehen, dass ein Druck in dem Ammoniaksynthese-Kreislauf gemessen wird, insbesondere der Druck des dem Ammoniakkonverter zugeführten Edukt-Gasgemischs. Die Messung des Drucks ermöglicht eine Regelung des Drucks in dem Ammoniaksynthese-Kreislauf. Zur Messung des Drucks kann der Ammoniaksynthese-Kreislauf, insbesondere eine Gasleitung des Ammoniaksynthese-Kreislaufs, einen Gasdrucksensor aufweisen.

Gemäß einer vorteilhaften Ausgestaltung der Erfindung ist vorgesehen, dass der Bypass-Gasstrom in Abhängigkeit von einem Druck in dem Ammoniaksynthese-Kreislauf, insbesondere dem Druck des dem Ammoniakkonverter zugeführten Edukt-Gasgemischs, eingestellt wird. Beispielsweise kann bei sinkendem Druck in dem Ammoniaksynthese-Kreislauf der Volumenstrom des Bypass-Gasstroms erhöht werden, um den Volumenstrom des Edukt-Gasgemischs zum Ammoniakkonverter zu reduzieren. Durch diese Maßnahmen kann der Druck des Edukt-Gasgemischs gestützt werden. Insofern ist es möglich, den Druck des Edukt-Gasgemischs im Wesentlichen konstant zu halten. Bevorzugt wird der Bypass-Gasstrom derart eingestellt, dass der Volumenstrom des Edukt-Gasgemischs stets größer oder gleich 50% des Nenn-Volumenstroms bei Volllast ist, so dass negative Auswirkungen eines zu geringen Volumenstroms in dem Ammoniakkonverter jedenfalls vermieden werden.

Gemäß einer vorteilhaften Ausgestaltung der Erfindung ist vorgesehen, dass im Teillastbetrieb ein weiterer Bypass-Gasstrom aus dem Produkt-Gasgemisch abgezweigt wird und zum Eingang des Zirkulators geleitet wird. Der weitere Bypass-Gasstrom kann den Abscheider überbrücken, dass Abscheiden von Ammoniak verhindern und dadurch zu einer Erhöhung der Ammoniakkonzentration in dem dem Zirkulator zugeführten Gasgemisch sowie dem Edukt-Gasgemisch führen.

Gemäß einer vorteilhaften Ausgestaltung der Erfindung ist vorgesehen, dass - zusätzlich zu dem Bypass-Gasstrom - der weitere Bypass-Gasstrom in Abhängigkeit von einem Druck in dem Ammoniaksynthese-Kreislauf, insbesondere dem Druck des dem Ammoniakkonverter zugeführten Edukt-Gasgemischs, eingestellt wird. Beispielsweise kann bei sinkendem Druck in dem Ammoniaksynthese-Kreislauf der Volumenstrom des weiteren Bypass-Gasstroms erhöht werden, um die Konzentration von Ammoniak im Edukt-Gasgemisch zu erhöhen. Ein vorübergehender Mangel von Wasserstoff im Edukt-Gasgemisch kann durch die erhöhte Ammoniak-Konzentration kompensiert werden, um einen ausreichend hohen Volumenstrom des Edukt-Gasgemischs, und damit einen ausreichend hohen Volumenstrom im Ammoniakkonverter, auch bei reduzierter Verfügbarkeit von Wasserstoff aufrechtzuerhalten. Durch die erhöhte Ammoniakkonzentration am Eintritt des Ammoniakkonverters wird weniger Ammoniak pro Durchtritt des Konverters gebildet, so dass der Umsatz im Ammoniakkonverter an die verminderte Wasserstoffzufuhr angepasst wird.

Gemäß einer vorteilhaften Ausgestaltung der Erfindung ist vorgesehen, dass der weitere Bypass-Gasstrom in Abhängigkeit von einer Ammoniakkonzentration in dem Ammoniaksynthese-Kreislauf eingestellt wird. Bevorzugt wird bei einem Absinken des Drucks in dem Ammoniaksynthese-Kreislauf ein Sollwert der Ammoniakkonzentration in dem Edukt-Gasgemisch erhöht. Durch den weiteren Bypass-Gasstrom kann die Konzentration an Ammoniak in dem Edukt-Gasgemisch verändert werden. Beispielsweise kann ein größerer Volumenstrom des weiteren Bypass-Gasstroms zu einer höheren Konzentration von Ammoniak im Edukt-Gasgemisch führen und eine kleinerer Volumenstrom des weiteren Bypass-Gasstroms zu einer geringeren Konzentration von Ammoniak im Edukt-Gasgemisch.

Gemäß einer konstruktiv vorteilhaften Ausgestaltung der Erfindung ist vorgesehen, dass der Bypass-Gasstrom mittels eines ersten steuerbaren Ventils abgezweigt wird. Bevorzugt ist das erste Ventil derart ausgelegt, dass es 50% oder mehr des Nenn-Volumenstroms des Edukt-Gasgemischs führen kann.

Gemäß einer konstruktiv vorteilhaften Ausgestaltung der Erfindung ist vorgesehen, dass der weitere Bypass-Gasstrom mittels mindestens eines zweiten steuerbaren Ventils abgezweigt und zum Eingang des Zirkulators geleitet wird.

Gemäß einer vorteilhaften Ausgestaltung der Erfindung ist vorgesehen, dass der weitere Bypass-Gasstrom mittels mehrerer zweiter steuerbarer Ventile abgezweigt und zum Eingang des Zirkulators geleitet wird, wobei ein erstes der zweiten Ventile einen kleineren Durchflusskoeffizienten als ein zweites der zweiten Ventile aufweist, und wobei zunächst nur das erste der zweiten Ventile geöffnet wird, und dann das zweite der zweiten Ventile geöffnet wird. Die zweiten Ventile sind bevorzugt parallel zueinander angeordnet. Durch das Vorsehen mehrerer zweiter Ventile, die nicht gleichzeitig, sondern nacheinander geöffnet bzw. geschlossen werden, kann der Volumenstrom des weiteren Bypass-Gasstroms mit zeitlich aufeinanderfolgenden unterschiedlichen Änderungsraten eingestellt werden. Bevorzugt sind zwei zweite Ventile vorgesehen.

Gemäß einer vorteilhaften Ausgestaltung der Erfindung ist vorgesehen, dass das zweite der zweiten Ventile erst dann geöffnet wird, wenn erste der zweiten Ventile vollständig geöffnet ist. Das erste der zweiten Ventile kann vergleichsweise schnell schalten und dadurch eine schnelle Reaktion auf Änderungen der Wasserstoffverfügbarkeit ermöglichen. Das zweite der zweiten Ventile kann dann bei vollständig geöffnetem erstem Ventil eine zusätzliche Vergrößerung des Volumenstroms des weiteren Bypass-Gasstroms ermöglichen.

Gemäß einer vorteilhaften Ausgestaltung der Erfindung ist vorgesehen, dass das zweite der zweiten Ventile erst dann geöffnet wird, wenn das erste Ventil vollständig geöffnet ist.

Gemäß einer vorteilhaften Ausgestaltung der Erfindung ist vorgesehen, dass der Wasserstoff mittels Elektrolyse hergestellt wird, die mit elektrischem Strom aus regenerativer Energie betrieben wird. Bevorzugt wird der elektrische Strom aus Wasserkraft gewonnen; bevorzugt hängt dabei die momentan verfügbare Menge an Wasserstoff von der momentanen Verfügbarkeit von Wasserkraft ab. Alternativ oder zusätzlich bevorzugt ist es, wenn der elektrische Strom aus Solarenergie gewonnen wird; bevorzugt hängt dabei die momentan verfügbare Menge an Wasserstoff von der momentanen Verfügbarkeit von Solarenergie ab. Weiter alternativ oder zusätzlich bevorzugt ist es, wenn der elektrische Strom aus Windkraft gewonnen wird; bevorzugt hängt dabei die momentan verfügbare Menge an Wasserstoff von der momentanen Verfügbarkeit von Windkraft ab.

Gemäß einer vorteilhaften Ausgestaltung der Erfindung ist vorgesehen, dass zwischen dem Eingang und dem Ausgang des Zirkulators ein *Anti-Surge*-Ventil (Pumpverhütungsventil) angeordnet ist. Das Anti-Surge-Ventil kann einen weiteren Bypass-Gasstrom zusätzlich zu dem Bypass-Gasstrom ermöglichen, wenn der Druck im Ammoniakkonverter zu groß wird oder der Volumenstrom auf der Saugseite des Zirkulators zu gering ist (Anti-Surge-Control, Pumpgrenzregelung). Bevorzugt ist das *Anti-*Surge-Ventil derart ausgelegt, dass es 100% des Nenn-Volumenstroms des Edukt-Gasgemischs führen kann.

Gemäß einem weiteren Aspekt der Erfindung wird eine Vorrichtung zur Synthese von Ammoniak beschrieben, umfassend:
- eine Zuführeinrichtung zum Bereitstellen von Wasserstoff und Stickstoff;
- einen Ammoniaksynthese-Kreislauf umfassend

einen Ammoniakkonverter zur katalytischen Synthese von Ammoniak, wobei dem Ammoniakkonverter ein Edukt-Gasgemisch zuführbar ist und ein Produkt-Gasgemisch aus dem Ammoniakkonverter abführbar ist;
einen Zirkulator zum Zuführen eines Wasserstoff und Stickstoff enthaltenden Edukt-Gasgemischs zu dem Ammoniakkonverter; und
einen Abscheider zum Abscheiden von Ammoniak aus einem Produkt-Gasgemisch des Ammoniakkonverters;
wobei der Ammoniaksynthese-Kreislauf dazu konfiguriert ist, in einem Volllastbetrieb betrieben zu werden, in welchem dem Ammoniaksynthese-Kreislauf eine Nenn-Durchflussmenge des Wasserstoffes bereitgestellt wird, und
wobei der Ammoniaksynthese-Kreislauf dazu konfiguriert ist, in einem Teillastbetrieb betrieben zu werden, in welchem dem Ammoniaksynthese-Kreislauf eine Durchflussmenge an Wasserstoff bereitgestellt wird, die geringer ist als die Nenn-Durchflussmenge,
wobei der Ammoniaksynthese-Kreislauf einen Bypass zum Führen eines Bypass-Gasstroms in dem Teillastbetrieb aufweist, wobei der Bypass derart angeordnet ist, dass der Bypass-Gasstrom von dem Edukt-Gasgemisch zwischen dem Zirkulator und dem Ammoniakkonverter abgezweigt und dem Produkt-Gasgemisch zwischen dem Ammoniakkonverter und dem Abscheider zugeführt werden kann.

Bei der erfindungsgemäßen Vorrichtung können dieselben Vorteile und technischen Wirkungen erreicht werden, wie sie bereits im Zusammenhang mit dem erfindungsgemäßen Verfahren zur Synthese von Ammoniak beschrieben worden sind.

Gemäß einer vorteilhaften Ausgestaltung der Erfindung ist vorgesehen, dass die Vorrichtung einen Druckregler umfasst, der dazu konfiguriert ist, einen Volumenstrom des Bypass-Gasstroms einzustellen, um den Druck des Edukt-Gasgemischs auf einen vorgegebenen Sollwert zu regeln. Bevorzugt ist der Druckregler dazu eingerichtet, einen Druck-Istwert des Edukt-Gasgemischs zu empfangen. Zur Messung des Druck-Istwerts ist bevorzugt ein Drucksensor als Teil des Ammoniaksynthese-Kreislaufs vorgesehen. Bevorzugt kann der Druckregler mittels des ersten Ventils den Bypass-Gasstrom einstellen.

Gemäß einer vorteilhaften Ausgestaltung der Erfindung ist vorgesehen, dass der Druckregler zusätzlich dazu konfiguriert ist, einen Volumenstrom des weiteren Gasstroms einzustellen (sogenannte "Split-Range-Regelung"), um den Druck des Edukt-Gasgemischs auf einen vorgegebenen Sollwert zu regeln. Der Druckregler ist bevorzugt dazu konfiguriert, ein oder mehrere zweite Ventile anzusteuern, welche zwischen dem Ausgang des Ammoniakkonverters und dem Eingang, also der Saugseite, des Zirkulators, angeordnet sind. Bevorzugt kann der Druckregler mittels des ersten oder des zweiten der zweiten Ventile den weiteren Gasstrom einstellen, welcher von dem Produkt-Gasgemisch abgezweigt und zum Eingang des Zirkulators geleitet wird.

Gemäß einer alternativen, vorteilhaften Ausgestaltung der Erfindung ist vorgesehen, dass die Vorrichtung einen Konzentrationsregler umfasst, der dazu konfiguriert ist, einen Volumenstrom des weiteren Gasstroms einzustellen, um eine Konzentration von Ammoniak in dem Edukt-Gasgemisch auf einen vorgegebenen Sollwert zu regeln. Der Konzentrationsregler ist bevorzugt dazu konfiguriert, ein oder mehrere zweite Ventile anzusteuern, welche zwischen dem Ausgang des Ammoniakkonverters und dem Eingang, also der Saugseite, des Zirkulators, angeordnet sind. Bevorzugt kann der Konzentrationsregler mittels des oder der zweiten Ventile den weiteren Gasstrom einstellen, welcher von dem Produkt-Gasgemisch abgezweigt und zum Eingang des Zirkulators geleitet wird.

Alternativ oder zusätzlich zu den vorstehend erläuterten vorteilhaften Ausgestaltungen der Vorrichtung können auch die vorteilhaften Merkmale und Ausgestaltungen des erfindungsgemäßen Verfahrens, allein oder in Kombination, bei der Vorrichtung zur Synthese von Ammoniak Anwendung finden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die Fig. 1 zeigt ein Ausführungsbeispiel einer Vorrichtung zur Synthese von Ammoniak mit unterschiedlichen Punkten zum Abzweigen und zum Zuführen des Bypass-Gasstroms um den Ammoniakkonverter.
Die Fig. 2 zeigt ein weiteres Ausführungsbeispiel einer Vorrichtung zur Synthese von Ammoniak mit einem Bypass-Gasstrom.
Die Fig. 3 zeigt ein weiteres Ausführungsbeispiel einer Vorrichtung zur Synthese von Ammoniak mit einem Bypass-Gasstrom.
Die Fig. 4 zeigt ein weiteres Ausführungsbeispiel einer Vorrichtung zur Synthese von Ammoniak mit einem Bypass-Gasstrom.

### Ausführungsformen der Erfindung

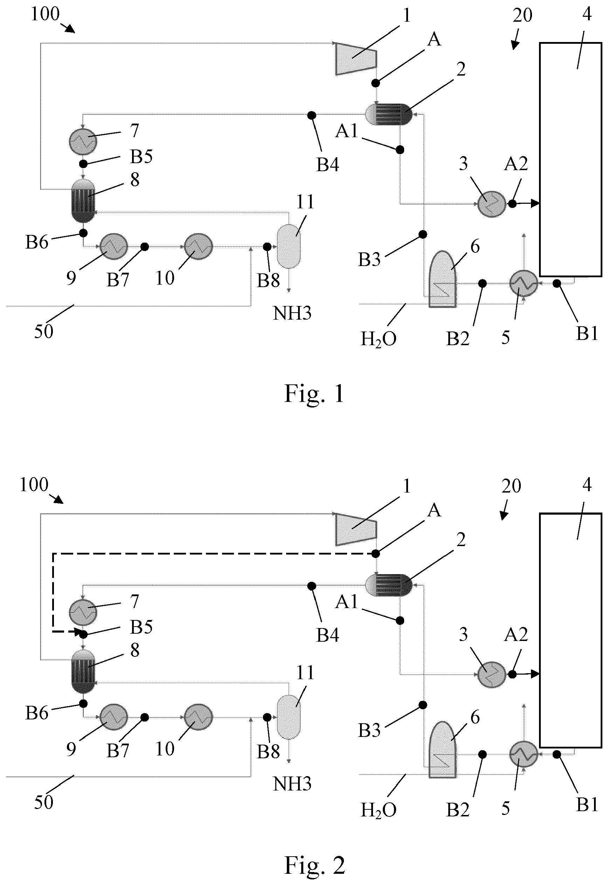

In Fig. 1 ist ein Ausführungsbeispiel einer Vorrichtung 100 zur Synthese von Ammoniak dargestellt. Die Vorrichtung 100 umfasst eine Zuführeinrichtung 50 zum Bereitstellen eines Wasserstoff und Stickstoff enthaltenden Einsatzgases sowie einen Ammoniaksynthese-Kreislauf 20. Der Wasserstoff wird als Teil eines Einsatzgases bereitgestellt und einem Abscheider 11 des Ammoniaksynthese-Kreislaufs 20 zugeführt. In dem Abscheider 11 wird aus einem Produkt-Gasgemisch des Ammoniaksynthese-Kreislaufs 20 Ammoniak NH₃ auskondensiert. Das verbleibende Gasgemisch wird im Ammoniaksynthese-Kreislauf 20 geführt und über einen Kältetauscher 8, einem als Kompressor ausgebildeten Zirkulator 1 des Ammoniaksynthese-Kreislaufs 20 zugeleitet.

Der Ammoniaksynthese-Kreislauf 20 umfasst ferner einen auf der Druckseite des Zirkulators 1 angeordneten Gas-Gas-Wärmetauscher 2 zum Vorwärmen eines auf der Druckseite des Zirkulators 1 vorliegenden Edukt-Gasgemischs. Das vorgewärmte Edukt-Gasgemisch wird zunächst einem Erhitzer 3, insbesondere einem elektrischen Erhitzer, und darauffolgend einem Ammoniakkonverter 4 des Ammoniaksynthese-Kreislaufs 20 zugeführt. In dem Ammoniakkonverter 4 erfolgt eine katalytische Synthese von Ammoniak aus im Edukt-Gasgemisch enthaltenen Wasserstoff und Stickstoff an einem geeigneten Katalysator.

Parallel zu dem Zirkulator 1 kann ein nicht dargestelltes *Anti-Surge*-Ventil angeordnet sein ist. Über das *Anti-Surge*-Ventil kann ein Gasstrom direkt zur Saugseite des Zirkulators 1 zurückgeführt werden, wenn der Mindestförderstrom unterschritten wird und der Zirkulator 1 droht in den Zustand des sogenannten "Surgens" (Pumpens) zu fallen.

Das aus dem Ammoniakkonverter 4 austretende Produkt-Gasgemisch wird zunächst durch einen Dampfüberhitzer 5 und einen darauffolgenden Abhitzekessel 6 zu dem Gas-Gas-Wärmetauscher 2 geführt. Dem Dampfüberhitzer 5 und dem Abhitzekessel 6 wird Wasser H₂O zugeführt. Über den Gas-Gas-Wärmetauscher 2 gibt das Produkt-Gasgemisch Wärme an das Edukt-Gasgemisch ab. Das Produkt-Gasgemisch wird dann über einen Gaskühler 7 zu einem Kältetauscher 8 geführt, in welchem Wärme von dem Produkt-Gasgemisch an das zum Zirkulator 1 geleitete Gasgemisch abgegeben wird. Das Produkt-Gasgemisch wird darauffolgend in einem ersten Kühler 9 und einem zweiter Kühler 10 weiter gekühlt und dann dem Abscheider 11 zugeleitet; hierbei kann es sich um einen kryogenen Abscheider handeln. Der Abscheider 11 kann als Tropfenabscheider ausgebildet sein.

Der Ammoniaksynthese-Kreislauf 20 wird idealerweise in einem Volllastbetrieb betrieben, in welchem dem Ammoniaksynthese-Kreislauf 20 eine Nenn-Durchflussmenge des Wasserstoffes bereitgestellt wird. Wird der Wasserstoff mittels Elektrolyse hergestellt, die mit elektrischem Strom aus regenerativer Energie betrieben wird, so kommt es aufgrund der schwankenden Verfügbarkeit von regenerativen Energien zu Schwankungen in der Verfügbarkeit von Wasserstoff. Sinkt der Volumenstrom an Wasserstoff unter einen Nenn-Volumenstrom, so wird der Ammoniaksynthese-Kreislauf 20 in einen Teillastbetrieb versetzt, in welchem dem Ammoniaksynthese-Kreislauf 20 eine Durchflussmenge an Wasserstoff bereitgestellt wird, die geringer ist als die Nenn-Durchflussmenge.

Im Teillastbetrieb wird ein Bypass-Gasstrom von dem Edukt-Gasgemisch zwischen dem Zirkulator 1 und dem Ammoniakkonverter 4 an einem Punkt A, A1, A2 abgezweigt und dem Produkt-Gasgemisch zwischen dem Ammoniakkonverter 4 und dem Abscheider 11 an einem Punkt B1, B2, B2, B4, B5, B6, B7, B8 zugeführt.

Die Temperaturen des jeweiligen Gasgemischs an den genannten Punkten können beispielsweise die folgenden Werte annehmen: A: 27 °C; A1: 204 °C; A2: 370 °C; B1: 462 °C; B2: 436 °C; B3: 240 °C; B4: 58 °C; B5: 27 °C; B6: 20 °C; B7: 15 °C; B8: 2 °C.

Die Kombinationen der unterschiedlichen Abzweigepunkte A, A1, A2 und Zuführpunkte B1, B2, B2, B4, B5, B6, B7, B8 bringen Vor- bzw. Nachteile mit sich, die in der nachfolgenden Tabelle zusammengefasst sind.

| | A | A1 | A2 |
|---|---|---|---|
| B1 | Vorteil: direkter Bypass um den Ammoniakkonverter | | |
| B2 | Nachteile: aufwändige Einbindung aufgrund heißer Bypass-Leitung; energetisch ungünstig, da weniger Dampf produziert/überhitzt wird | | |
| B3 | Nachteil: energetisch ungünstig | Vorteil: nahezu direkter Bypass um Ammoniakkonverter | |
| | | Nachteile: aufwändige Einbindung aufgrund heißer Bypass-Leitung; energetisch ungünstig | |
| B4 | Vorteile: energetisch fast neutral; günstige Einbindung | Nachteil: Temperatur am Eingang des Ammoniakkonverters niedrig | |
| B5 | Vorteile: energetisch neutral; günstige Einbindung | | |
| B6 | Nachteil: energetisch ungünstig | | |
| B7 | | | |
| B8 | Vorteil: zusätzliche Verringerung der Ammoniakkonzentration-Abscheidung im Abscheider durch die Erhöhung der Temperatur im Abscheider und damit gewünschte Erhöhung der Ammoniakkonzentration am Eintritt in den Ammoniakkonverter | | |

Besonders vorteilhafte Ausführungsbeispiele eines erfindungsgemäßen Teillastbetriebs sollen nachfolgend anhand der Darstellungen in Fig. 2, 3 und 4 erläutert werden.

Fig. 2 zeigt ein Ausführungsbeispiel, bei welchem das Edukt-Gasgemisch mittels eines Gas-Gas-Wärmetauschers 2 vorgewärmt wird, wobei der Gas-Gas-Wärmetauscher 2 einen Wärmeübergang von dem Produkt-Gasgemisch auf das aus dem Zirkulator 1 austretende Edukt-Gasgemisch bereitstellt, wobei in dem Teillastbetrieb der erste Gasstrom von dem Edukt-Gasgemisch zwischen dem Zirkulator 1 und dem Gas-Gas-Wärmetauscher 2 abgezweigt wird; und dass das Produkt-Gasgemisch zunächst mittels eines Gaskühlers 7 und darauffolgend mittels eines Kältetauschers 8 gekühlt wird, wobei der Kältetauscher 8 einen Wärmeübergang von dem Produkt-Gasgemisch auf ein dem Zirkulator zugeführtes Gasgemisch bereitstellt, wobei in dem Teillastbetrieb der Bypass-Gasstrom dem Produkt-Gasgemisch zwischen dem Gaskühler 7 und dem Kältetauscher 8 zugeführt wird. Dieses Ausführungsbeispiel bringt den Vorteil mit sich, dass am Abzweigepunkt A und am Zuführpunkt B5 des Bypass-Gasstrom nahezu identische Temperaturen vorliegen. Insofern verändert der Bypass-Gasstrom die Temperatur des Produkt-Gasgemischs zwischen dem Gaskühler 7 und dem Kältetauscher 8 nur gering bis gar nicht. Der Teillastbetrieb kann somit im Hinblick auf den Bypass-Gasstrom energetisch neutral sein.

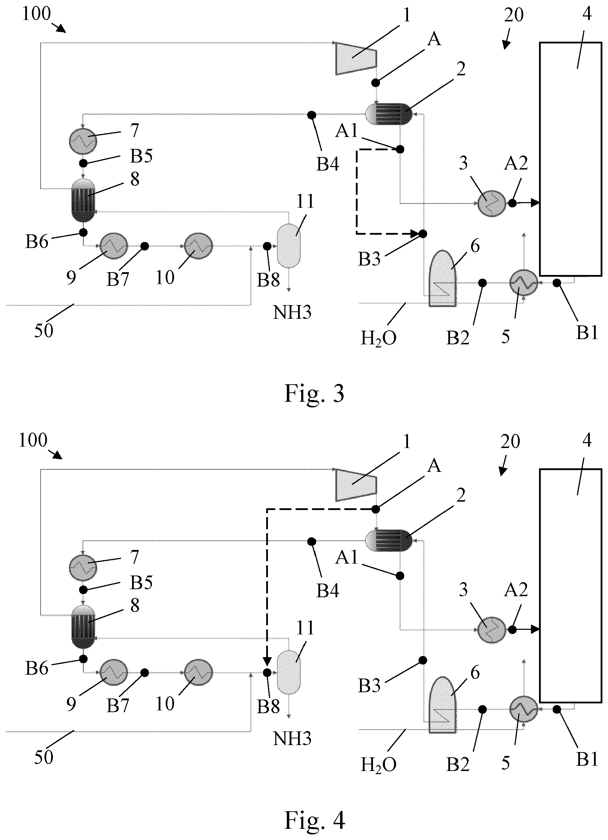

Fig. 3 zeigt ein Ausführungsbeispiel, bei welchem das Edukt-Gasgemisch mittels eines Gas-Gas-Wärmetauschers 2 vorgewärmt wird, wobei der Gas-Gas-Wärmetauscher 2 einen Wärmeübergang von dem Produkt-Gasgemisch auf das aus dem Zirkulator 1 austretende Edukt-Gasgemisch bereitstellt und das mittels des Gas-Gas-Wärmetauschers 2 vorgewärmte Edukt-Gasgemisch mittels eines Erhitzers 3 erhitzt wird, wobei in dem Teillastbetrieb der Bypass-Gasstrom von dem Edukt-Gasgemisch zwischen dem Gas-Gas-Wärmetauscher 2 und dem Erhitzer 3 abgezweigt wird; und dass das aus dem Ammoniakkonverter 4 austretende Produkt-Gasgemisch zunächst einen Dampfüberhitzer 5, darauffolgend einen Abhitzekessel 6, englisch "waste heat boiler", darauffolgend einen Gas-Gas-Wärmetauscher 2 durchläuft, wobei in dem Teillastbetrieb der Bypass-Gasstrom dem Produkt-Gasgemisch zwischen dem Abhitzekessel 6 und dem Gas-Gas-Wärmetauscher 2 zugeführt wird. Bei diesem Ausführungsbeispiel kann im Teillastbetrieb ein nahezu direkter Bypass um den Ammoniakkonverter 4 ermöglicht werden.

Fig. 4 zeigt ein Ausführungsbeispiel, bei welchem das Edukt-Gasgemisch mittels eines Gas-Gas-Wärmetauschers 2 vorgewärmt wird, wobei der Gas-Gas-Wärmetauscher 2 einen Wärmeübergang von dem Produkt-Gasgemisch auf das aus dem Zirkulator 1 austretende Edukt-Gasgemisch bereitstellt, wobei in dem Teillastbetrieb der Bypass-Gasstrom von dem Edukt-Gasgemisch zwischen dem Zirkulator 1 und dem Gas-Gas-Wärmetauscher 2 abgezweigt wird; und dass das Produkt-Gasgemisch zunächst mittels eines Kältetauschers 8, darauffolgend mittels eines ersten Kühlers 9 und darauffolgend mittels eines zweiten Kühlers 10 gekühlt und darauffolgend einem Abscheider 11 zugeführt wird, wobei der Kältetauscher 8 einen Wärmeübergang von dem Produkt-Gasgemisch auf ein dem Zirkulator 1 zugeführtes Gasgemisch bereitstellt, wobei in dem Teillastbetrieb der Bypass-Gasstrom dem Produkt-Gasgemisch zwischen dem zweiten Kühler 10 und dem Abscheider 11 zugeführt wird. Bei diesem Ausführungsbeispiel kommt es im Teillastbetrieb aufgrund der Zuführung des Bypass-Gasstroms ausgehend vom Punkt A zum Punkt B8 zu einer Erhöhung der Temperatur im Abscheider 11. Diese Temperaturerhöhung geht mit einer Reduktion der Ammoniakabscheidung im Abscheider 11 einher und erhöht somit die Ammoniakkonzentration in dem Gasstrom, welcher dem Eingang des Zirkulator 1 zugeleitet wird. Folglich erhöht sich auch die Ammoniakkonzentration im Edukt-Gasstrom, welcher dem Ammoniakkonverter 4 zugeführt wird.

Bei den vorstehend erläuterten Ausführungsbeispielen kann optional im Teillastbetrieb zusätzlich ein weiterer Gasstrom aus dem Produkt-Gasgemisch abgezweigt und zum Eingang des Zirkulators geleitet werden, um die Ammoniakkonzentration im Edukt-Gasgemisch zu erhöhen. Der weitere Gasstrom kann beispielsweise zwischen dem Gas-Gas-Wärmetauscher 2 und dem Gaskühler 7, also am Punkt B4, abgezweigt werden. Alternativ ist es möglich, den weiteren Gasstrom an einem der Punkte B5, B6, B7 oder B8 abzuzweigen.

### Bezugszeichenliste

- 1: Zirkulator
- 2: Gas-Gas-Wärmetauscher
- 3: Erhitzer, Elektroerhitzer
- 4: Ammoniakkonverter
- 5: Dampfüberhitzer
- 6: Abhitzekessel
- 7: Gaskühler
- 8: Kältetauscher
- 9: Kühler
- 10: Kühler
- 11: Abscheider
- 20: Zuführvorrichtung
- 50: Ammoniaksynthese-Kreislauf
- 100: Vorrichtung zur Synthese von Ammoniak

- H₂O: Wasser
- NH₃: Ammoniak

## Patentansprüche

1. Ein Verfahren zur Synthese von Ammoniak umfassend:
- Bereitstellen von Wasserstoff und Stickstoff;
- Zuführen des Wasserstoffes und des Stickstoffs zu einem Ammoniaksynthese-Kreislauf (20), umfassend
einen Ammoniakkonverter (4), in welchem Ammoniak katalytisch synthetisiert wird, wobei dem Ammoniakkonverter (4) ein Edukt-Gasgemisch zugeführt wird und ein Produkt-Gasgemisch aus dem Ammoniakkonverter (4) abgeführt wird;
einen Zirkulator (1), welcher dem Ammoniakkonverter (4) ein den Wasserstoff und den Stickstoff enthaltendes Edukt-Gasgemisch zuführt; und
einen Abscheider (11), in welchem Ammoniak aus einem Produkt-Gasgemisch des Ammoniakkonverters (4) abgeschieden wird;
wobei der Ammoniaksynthese-Kreislauf (20) in einem Volllastbetrieb betrieben wird, in welchem dem Ammoniaksynthese-Kreislauf (20) eine Nenn-Durchflussmenge des Wasserstoffes bereitgestellt wird, und
wobei der Ammoniaksynthese-Kreislauf (20) entweder von dem Volllastbetrieb in einen Teillastbetrieb überführt wird oder von einem Teillastbetrieb in den Volllastbetrieb überführt wird, wobei dem Ammoniaksynthese-Kreislauf (20) in dem Teillastbetrieb eine Durchflussmenge an Wasserstoff bereitgestellt wird, die geringer ist als die Nenn-Durchflussmenge, insbesondere geringer ist als 90% der Nenn-Durchflussmenge,
wobei in dem Teillastbetrieb ein Bypass-Gasstrom von dem Edukt-Gasgemisch zwischen dem Zirkulator (1) und dem Ammoniakkonverter (4) abgezweigt und dem Produkt-Gasgemisch zwischen dem Ammoniakkonverter (4) und dem Abscheider (11) zugeführt wird.

2. Das Verfahren nach Anspruch 1, **dadurch gekennzeichnet, dass** das Edukt-Gasgemisch mittels eines Gas-Gas-Wärmetauschers (2) vorgewärmt wird, wobei der Gas-Gas-Wärmetauscher (2) einen Wärmeübergang von dem Produkt-Gasgemisch auf das aus dem Zirkulator (1) austretende Edukt-Gasgemisch bereitstellt, wobei in dem Teillastbetrieb der Bypass-Gasstrom von dem Edukt-Gasgemisch zwischen dem Zirkulator (1) und dem Gas-Gas-Wärmetauscher (2) abgezweigt wird.

3. Das Verfahren nach Anspruch 1, **dadurch gekennzeichnet, dass** das Edukt-Gasgemisch mittels eines Gas-Gas-Wärmetauschers (2) vorgewärmt wird, wobei der Gas-Gas-Wärmetauscher (2) einen Wärmeübergang von dem Produkt-Gasgemisch auf das aus dem Zirkulator (1) austretende Edukt-Gasgemisch bereitstellt und das mittels des Gas-Gas-Wärmetauschers (2) vorgewärmte Edukt-Gasgemisch mittels eines Erhitzers (3) erhitzt wird, wobei in dem Teillastbetrieb der Bypass-Gasstrom von dem Edukt-Gasgemisch zwischen dem Gas-Gas-Wärmetauscher (2) und dem Erhitzer (3) abgezweigt wird.

4. Das Verfahren nach Anspruch 1, **dadurch gekennzeichnet, dass** das Edukt-Gasgemisch mittels eines Gas-Gas-Wärmetauschers (2) vorgewärmt wird, wobei der Gas-Gas-Wärmetauscher (2) einen Wärmeübergang von dem Produkt-Gasgemisch auf das aus dem Zirkulator (1) austretende Edukt-Gasgemisch bereitstellt und das mittels des Gas-Gas-Wärmetauschers (2) vorgewärmte Edukt-Gasgemisch mittels eines Erhitzers (3) erhitzt wird, wobei in dem Teillastbetrieb der Bypass-Gasstrom von dem Edukt-Gasgemisch zwischen dem Erhitzer (3) und dem Ammoniakkonverter (4) abgezweigt wird.

5. Das Verfahren nach einem der Ansprüche 1 bis 4, **dadurch gekennzeichnet, dass** das aus dem Ammoniakkonverter (4) austretende Produkt-Gasgemisch einen Dampfüberhitzer (5) durchläuft, wobei in dem Teillastbetrieb der Bypass-Gasstrom dem Produkt-Gasgemisch zwischen dem Ammoniakkonverter (4) und dem Dampfüberhitzer (5) zugeführt wird.

6. Das Verfahren nach einem der Ansprüche 1 bis 4, **dadurch gekennzeichnet, dass** das aus dem Ammoniakkonverter (4) austretende Produkt-Gasgemisch zunächst einen Dampfüberhitzer (5) und darauffolgend einen Abhitzekessel (6), durchläuft, wobei in dem Teillastbetrieb der Bypass-Gasstrom dem Produkt-Gasgemisch zwischen dem Dampfüberhitzer (5) und dem Abhitzekessel (6) zugeführt wird.

7. Das Verfahren nach einem der Ansprüche 1 bis 4, **dadurch gekennzeichnet, dass** das aus dem Ammoniakkonverter (4) austretende Produkt-Gasgemisch einen Abhitzekessel (6), darauffolgend einen Gas-Gas-Wärmetauscher (2) durchläuft, wobei in dem Teillastbetrieb der Bypass-Gasstrom dem Produkt-Gasgemisch zwischen dem Abhitzekessel (6) und dem Gas-Gas-Wärmetauscher (2) zugeführt wird.

8. Das Verfahren nach Anspruch 1, **dadurch gekennzeichnet, dass** das Edukt-Gasgemisch mittels eines Gas-Gas-Wärmetauschers (2) vorgewärmt wird, wobei der Gas-Gas-Wärmetauscher (2) einen Wärmeübergang von dem Produkt-Gasgemisch auf das aus dem Zirkulator (1) austretende Edukt-Gasgemisch bereitstellt und das mittels des Gas-Gas-Wärmetauschers (2) vorgewärmte Edukt-Gasgemisch mittels eines Erhitzers (3) erhitzt wird, wobei in dem Teillastbetrieb der Bypass-Gasstrom von dem Edukt-Gasgemisch zwischen dem Gas-Gas-Wärmetauscher (2) und dem Erhitzer (3) abgezweigt wird; und dass das aus dem Ammoniakkonverter (4) austretende Produkt-Gasgemisch zunächst einen Dampfüberhitzer (5), darauffolgend einen Abhitzekessel (6), darauffolgend einen Gas-Gas-Wärmetauscher (2) durchläuft, wobei in dem Teillastbetrieb der Bypass-Gasstrom dem Produkt-Gasgemisch zwischen dem Abhitzekessel (6) und dem Gas-Gas-Wärmetauscher (2) zugeführt wird.

9. Das Verfahren nach einem der Ansprüche 1 bis 4, **dadurch gekennzeichnet, dass** das Produkt-Gasgemisch mittels eines Gas-Gas-Wärmetauschers (2) und darauffolgend mittels eines Gaskühlers (7) gekühlt wird, wobei der Gas-Gas-Wärmetauscher (2) einen Wärmeübergang von dem Produkt-Gasstrom auf den Edukt-Gasstrom bereitstellt, wobei in dem Teillastbetrieb der Bypass-Gasstrom dem Produkt-Gasgemisch zwischen dem Gas-Gas-Wärmetauscher (2) und dem Gaskühler (7) zugeführt wird.

10. Das Verfahren nach einem der Ansprüche 1 bis 4, **dadurch gekennzeichnet, dass** das Produkt-Gasgemisch zunächst mittels eines Gaskühlers (7) und darauffolgend mittels eines Kältetauschers (8) gekühlt wird, wobei der Kältetauscher (8) einen Wärmeübergang von dem Produkt-Gasgemisch auf ein dem Zirkulator zugeführtes Gasgemisch bereitstellt, wobei in dem Teillastbetrieb der Bypass-Gasstrom dem Produkt-Gasgemisch zwischen dem Gaskühler (7) und dem Kältetauscher (8) zugeführt wird.

11. Das Verfahren nach Anspruch 1, **dadurch gekennzeichnet, dass** das Edukt-Gasgemisch mittels eines Gas-Gas-Wärmetauschers (2) vorgewärmt wird, wobei der Gas-Gas-Wärmetauscher (2) einen Wärmeübergang von dem Produkt-Gasgemisch auf das aus dem Zirkulator (1) austretende Edukt-Gasgemisch bereitstellt, wobei in dem Teillastbetrieb der Bypass-Gasstrom von dem Edukt-Gasgemisch zwischen dem Zirkulator (1) und dem Gas-Gas-Wärmetauscher (2) abgezweigt wird; und dass das Produkt-Gasgemisch zunächst mittels eines Gaskühlers (7) und darauffolgend mittels eines Kältetauschers (8) gekühlt wird, wobei der Kältetauscher (8) einen Wärmeübergang von dem Produkt-Gasgemisch auf ein dem Zirkulator zugeführtes Gasgemisch bereitstellt, wobei in dem Teillastbetrieb der Bypass-Gasstrom dem Produkt-Gasgemisch zwischen dem Gaskühler (7) und dem Kältetauscher (8) zugeführt wird.

12. Das Verfahren nach einem der Ansprüche 1 bis 4, **dadurch gekennzeichnet, dass** das Produkt-Gasgemisch zunächst mittels eines Kältetauschers (8) und darauffolgend mittels eines Kühlers (9) gekühlt wird, wobei der Kältetauscher (8) einen Wärmeübergang von dem Produkt-Gasgemisch auf ein dem Zirkulator (1) zugeführtes Gasgemisch bereitstellt, wobei in dem Teillastbetrieb der Bypass-Gasstrom dem Produkt-Gasgemisch zwischen dem Kältetauscher (8) und dem Kühler (9) zugeführt wird.

13. Das Verfahren nach einem der Ansprüche 1 bis 4, **dadurch gekennzeichnet, dass** das Produkt-Gasgemisch zunächst mittels eines ersten Kühlers (9) und darauffolgend mittels eines zweiten Kühlers (10) gekühlt wird, wobei in dem Teillastbetrieb der Bypass-Gasstrom dem Produkt-Gasgemisch zwischen dem ersten Kühler (9) und dem zweiten Kühler (10) zugeführt wird.

14. Das Verfahren nach einem der Ansprüche 1 bis 4, **dadurch gekennzeichnet, dass** das Produkt-Gasgemisch mittels eines Kühlers (10) gekühlt und darauffolgend einem Abscheider (11) zugeführt wird, wobei in dem Teillastbetrieb der Bypass-Gasstrom dem Produkt-Gasgemisch zwischen dem Kühler (10) und dem Abscheider (11) zugeführt wird.

15. Das Verfahren nach Anspruch 1, **dadurch gekennzeichnet, dass** das Edukt-Gasgemisch mittels eines Gas-Gas-Wärmetauschers (2) vorgewärmt wird, wobei der Gas-Gas-Wärmetauscher (2) einen Wärmeübergang von dem Produkt-Gasgemisch auf das aus dem Zirkulator (1) austretende Edukt-Gasgemisch bereitstellt, wobei in dem Teillastbetrieb der Bypass-Gasstrom von dem Edukt-Gasgemisch zwischen dem Zirkulator (1) und dem Gas-Gas-Wärmetauscher (2) abgezweigt wird; und dass das Produkt-Gasgemisch mittels eines Kühlers (10) gekühlt und darauffolgend einem Abscheider (11) zugeführt wird, wobei in dem Teillastbetrieb der Bypass-Gasstrom dem Produkt-Gasgemisch zwischen dem Kühler (10) und dem Abscheider (11) zugeführt wird.

16. Eine Vorrichtung (100) zur Synthese von Ammoniak umfassend:
- eine Zuführeinrichtung (50) zum Bereitstellen von Wasserstoff und Stickstoff;
- einen Ammoniaksynthese-Kreislauf (20) umfassend
einen Ammoniakkonverter (4) zur katalytischen Synthese von Ammoniak, wobei dem Ammoniakkonverter (4) ein Edukt-Gasgemisch zuführbar ist und ein Produkt-Gasgemisch aus dem Ammoniakkonverter (4) abführbar ist;
einen Zirkulator (1) zum Zuführen eines Wasserstoff und Stickstoff enthaltenden Edukt-Gasgemischs zu dem Ammoniakkonverter (4); und
einen Abscheider (11) zum Abscheiden von Ammoniak aus einem Produkt-Gasgemisch des Ammoniakkonverters (4);
wobei der Ammoniaksynthese-Kreislauf (20) dazu konfiguriert ist in einem Volllastbetrieb betrieben zu werden, in welchem dem Ammoniaksynthese- Kreislauf (20) eine Nenn-Durchflussmenge des Wasserstoffes bereitgestellt wird, und
wobei der Ammoniaksynthese-Kreislauf (20) dazu konfiguriert ist, in einem Teillastbetrieb betrieben zu werden, in welchem dem Ammoniaksynthese-Kreislauf (20) eine Durchflussmenge an Wasserstoff bereitgestellt wird, die geringer ist als die Nenn-Durchflussmenge,
wobei der Ammoniaksynthese-Kreislauf (20) einen Bypass zum Führen eines Bypass-Gasstroms in dem Teillastbetrieb aufweist, wobei der Bypass derart angeordnet ist, dass der Bypass-Gasstrom von dem Edukt-Gasgemisch zwischen dem Zirkulator (1) und dem Ammoniakkonverter (4) abgezweigt und dem Produkt-Gasgemisch zwischen dem Ammoniakkonverter (4) und dem Abscheider (11) zugeführt werden kann.

## Claims

1. A method for the synthesis of ammonia comprising:
- providing hydrogen and nitrogen;
- supplying the hydrogen and the nitrogen to an ammonia synthesis circuit (20), comprising an ammonia converter (4), in which ammonia is catalytically synthesized, wherein a reactant gas mixture is supplied to the ammonia converter (4) and a product gas mixture is discharged from the ammonia converter (4);
a circulator (1), which supplies to the ammonia converter (4) a reactant gas mixture containing the hydrogen and the nitrogen; and
a separator (11), in which ammonia is separated from a product gas mixture of the ammonia converter (4);
wherein the ammonia synthesis circuit (20) is operated in a full-load operation, in which a nominal flow rate of the hydrogen is provided to the ammonia synthesis circuit (20), and
wherein the ammonia synthesis circuit (20) is either transferred from the full-load operation into a partial-load operation or is transferred from a partial-load operation into the full-load operation, wherein in the partial-load operation a flow rate of hydrogen is provided to the ammonia synthesis circuit (20), which is lower than the nominal flow rate, in particular lower than 90% of the nominal flow rate,
wherein in the partial-load operation a bypass gas flow is branched off from the reactant gas mixture between the circulator (1) and the ammonia converter (4) and is supplied to the product gas mixture between the ammonia converter (4) and the separator (11).

2. The method according to claim 1, **characterized in that** the reactant gas mixture is preheated by means of a gas-gas heat exchanger (2), wherein the gas-gas heat exchanger (2) provides a heat transfer from the product gas mixture to the reactant gas mixture exiting the circulator (1), wherein in the partial-load operation the bypass gas flow is branched off from the reactant gas mixture between the circulator (1) and the gas-gas heat exchanger (2).

3. The method according to claim 1, **characterized in that** the reactant gas mixture is preheated by means of a gas-gas heat exchanger (2), wherein the gas-gas heat exchanger (2) provides a heat transfer from the product gas mixture to the reactant gas mixture exiting the circulator (1) and the reactant gas mixture preheated by means of the gas-gas heat exchanger (2) is heated by means of a heater (3), wherein in the partial-load operation the bypass gas flow is branched off from the reactant gas mixture between the gas-gas heat exchanger (2) and the heater (3).

4. The method according to claim 1, **characterized in that** the reactant gas mixture is preheated by means of a gas-gas heat exchanger (2), wherein the gas-gas heat exchanger (2) provides a heat transfer from the product gas mixture to the reactant gas mixture exiting the circulator (1) and the reactant gas mixture preheated by means of the gas-gas heat exchanger (2) is heated by means of a heater (3), wherein in the partial-load operation the bypass gas flow is branched off from the reactant gas mixture between the heater (3) and the ammonia converter (4).

5. The method according to one of claims 1 to 4, **characterized in that** the product gas mixture exiting the ammonia converter (4) passes through a steam superheater (5), wherein in the partial-load operation the bypass gas flow is supplied to the product gas mixture between the ammonia converter (4) and the steam superheater (5).

6. The method according to one of claims 1 to 4, **characterized in that** the product gas mixture exiting the ammonia converter (4) initially passes through a steam superheater (5) and subsequently through a waste heat boiler (6), wherein in the partial-load operation the bypass gas flow is supplied to the product gas mixture between the steam superheater (5) and the waste heat boiler (6).

7. The method according to one of claims 1 to 4, **characterized in that** the product gas mixture exiting the ammonia converter (4) passes through a waste heat boiler (6), subsequently through a gas-gas heat exchanger (2), wherein in the partial-load operation the bypass gas flow is supplied to the product gas mixture between the waste heat boiler (6) and the gas-gas heat exchanger (2).

8. The method according to claim 1, **characterized in that** the reactant gas mixture is preheated by means of a gas-gas heat exchanger (2), wherein the gas-gas heat exchanger (2) provides a heat transfer from the product gas mixture to the reactant gas mixture exiting the circulator (1) and the reactant gas mixture preheated by means of the gas-gas heat exchanger (2) is heated by means of a heater (3), wherein in the partial-load operation the bypass gas flow is branched off from the reactant gas mixture between the gas-gas heat exchanger (2) and the heater (3); and that the product gas mixture exiting the ammonia converter (4) initially passes through a steam superheater (5), subsequently through a waste heat boiler (6), subsequently through a gas-gas heat exchanger (2), wherein in the partial-load operation the bypass gas flow is supplied to the product gas mixture between the waste heat boiler (6) and the gas-gas heat exchanger (2).

9. The method according to one of claims 1 to 4, **characterized in that** the product gas mixture is cooled by means of a gas-gas heat exchanger (2) and subsequently by means of a gas cooler (7), wherein the gas-gas heat exchanger (2) provides a heat transfer from the product gas flow to the reactant gas flow, wherein in the partial-load operation the bypass gas flow is supplied to the product gas mixture between the gas-gas heat exchanger (2) and the gas cooler (7).

10. The method according to one of claims 1 to 4, **characterized in that** the product gas mixture is initially cooled by means of a gas cooler (7) and subsequently by means of a refrigeration exchanger (8), wherein the refrigeration exchanger (8) provides a heat transfer from the product gas mixture to a gas mixture supplied to the circulator, wherein in the partial-load operation the bypass gas flow is supplied to the product gas mixture between the gas cooler (7) and the refrigeration exchanger (8).

11. The method according to claim 1, **characterized in that** the reactant gas mixture is preheated by means of a gas-gas heat exchanger (2), wherein the gas-gas heat exchanger (2) provides a heat transfer from the product gas mixture to the reactant gas mixture exiting the circulator (1), wherein in the partial-load operation the bypass gas flow is branched off from the reactant gas mixture between the circulator (1) and the gas-gas heat exchanger (2); and that the product gas mixture is initially cooled by means of a gas cooler (7) and subsequently by means of a refrigeration exchanger (8), wherein the refrigeration exchanger (8) provides a heat transfer from the product gas mixture to a gas mixture supplied to the circulator, wherein in the partial-load operation the bypass gas flow is supplied to the product gas mixture between the gas cooler (7) and the refrigeration exchanger (8).

12. The method according to one of claims 1 to 4, **characterized in that** the product gas mixture is initially cooled by means of a refrigeration exchanger (8) and subsequently by means of a cooler (9), wherein the refrigeration exchanger (8) provides a heat transfer from the product gas mixture to a gas mixture supplied to the circulator (1), wherein in the partial-load operation the bypass gas flow is supplied to the product gas mixture between the refrigeration exchanger (8) and the cooler (9).

13. The method according to one of claims 1 to 4, **characterized in that** the product gas mixture is initially cooled by means of a first cooler (9) and subsequently by means of a second cooler (10), wherein in the partial-load operation the bypass gas flow is supplied to the product gas mixture between the first cooler (9) and the second cooler (10).

14. The method according to one of claims 1 to 4, **characterized in that** the product gas mixture is cooled by means of a cooler (10) and subsequently supplied to a separator (11), wherein in the partial-load operation the bypass gas flow is supplied to the product gas mixture between the cooler (10) and the separator (11).

15. The method according to claim 1, **characterized in that** the reactant gas mixture is preheated by means of a gas-gas heat exchanger (2), wherein the gas-gas heat exchanger (2) provides a heat transfer from the product gas mixture to the reactant gas mixture exiting the circulator (1), wherein in the partial-load operation the bypass gas flow is branched off from the reactant gas mixture between the circulator (1) and the gas-gas heat exchanger (2); and that the product gas mixture is cooled by means of a cooler (10) and subsequently supplied to a separator (11), wherein in the partial-load operation the bypass gas flow is supplied to the product gas mixture between the cooler (10) and the separator (11).

16. A device (100) for the synthesis of ammonia comprising:
- a feed device (50) for providing hydrogen and nitrogen;
- an ammonia synthesis circuit (20) comprising
an ammonia converter (4) for the catalytic synthesis of ammonia, wherein a reactant gas mixture can be supplied to the ammonia converter (4) and a product gas mixture can be discharged from the ammonia converter (4);
a circulator (1) for supplying a reactant gas mixture containing hydrogen and nitrogen to the ammonia converter (4); and
a separator (11) for separating ammonia from a product gas mixture of the ammonia converter (4);
wherein the ammonia synthesis circuit (20) is configured to be operated in a full-load operation, in which a nominal flow rate of the hydrogen is provided to the ammonia synthesis circuit (20), and
wherein the ammonia synthesis circuit (20) is configured to be operated in a partial-load operation, in which a flow rate of hydrogen is provided to the ammonia synthesis circuit (20), which is lower than the nominal flow rate,
wherein the ammonia synthesis circuit (20) comprises a bypass for conducting a bypass gas flow in the partial-load operation, wherein the bypass is arranged such that the bypass gas flow can be branched off from the reactant gas mixture between the circulator (1) and the ammonia converter (4) and can be supplied to the product gas mixture between the ammonia converter (4) and the separator (11).

## Revendications

1. Procédé de synthèse de l'ammoniac, comprenant:
- la fourniture d'hydrogène et d'azote;
- l'alimentation d'un circuit de synthèse d'ammoniac (20) en hydrogène et en azote, ledit circuit comprenant
un convertisseur d'ammoniac (4), dans lequel l'ammoniac est synthétisé par voie catalytique, un mélange gazeux de réactifs étant fourni au convertisseur d'ammoniac (4) et un mélange gazeux de produits étant évacué dudit convertisseur d'ammoniac (4);
un circulateur (1), qui alimente le convertisseur d'ammoniac (4) en un mélange gazeux de réactifs contenant l'hydrogène et l'azote ; et
un séparateur (11), dans lequel l'ammoniac est séparé d'un mélange gazeux de produits provenant du convertisseur d'ammoniac (4) ;
dans lequel le circuit de synthèse d'ammoniac (20) fonctionne en régime de pleine charge, dans lequel un débit nominal d'hydrogène est fourni au circuit de synthèse d'ammoniac (20), et
dans lequel le circuit de synthèse d'ammoniac (20) est soit transféré du fonctionnement à pleine charge vers un fonctionnement à charge partielle, soit transféré d'un fonctionnement à charge partielle vers le fonctionnement à pleine charge, dans lequel, en fonctionnement à charge partielle, un débit d'hydrogène est fourni au circuit de synthèse d'ammoniac (20) lequel est inférieur au débit nominal, en particulier inférieur à 90 % du débit nominal,
dans lequel, en fonctionnement à charge partielle, un flux de gaz de dérivation est dérivé du mélange gazeux de réactifs entre le circulateur (1) et le convertisseur d'ammoniac (4) et est fourni au mélange gazeux de produits entre le convertisseur d'ammoniac (4) et le séparateur (11).

2. Procédé selon la revendication 1, **caractérisé en ce que** le mélange gazeux de réactifs est préchauffé au moyen d'un échangeur de chaleur gaz-gaz (2), dans lequel l'échangeur de chaleur gaz-gaz (2) assure un transfert de chaleur du mélange gazeux produit vers le mélange gazeux réactif sortant du circulateur (1), et dans lequel, en fonctionnement à charge partielle, le flux de gaz de dérivation est séparé du mélange gazeux réactif entre le circulateur (1) et l'échangeur de chaleur gaz-gaz (2).

3. Procédé selon la revendication 1, **caractérisé en ce que** le mélange gazeux réactif est préchauffé au moyen d'un échangeur de chaleur gaz-gaz (2), dans lequel l'échangeur de chaleur gaz-gaz (2) assure un transfert de chaleur du mélange gazeux produit vers le mélange gazeux réactif sortant du circulateur (1) et le mélange gazeux réactif préchauffé au moyen de l'échangeur de chaleur gaz-gaz (2) est chauffé au moyen d'un dispositif de chauffage (3), le flux de gaz de dérivation étant, en fonctionnement à charge partielle, dérivé du mélange gazeux réactif entre l'échangeur de chaleur gaz-gaz (2) et le réchauffeur (3).

4. Procédé selon la revendication 1, **caractérisé en ce que** le mélange gazeux réactif est préchauffé au moyen d'un échangeur de chaleur gaz-gaz (2), dans lequel l'échangeur de chaleur gaz-gaz (2) assure un transfert de chaleur du mélange gazeux produit vers le mélange gazeux réactif sortant du circulateur (1) et le mélange gazeux réactif préchauffé au moyen de l'échangeur de chaleur gaz-gaz (2) est chauffé au moyen d'un dispositif de chauffage (3), le flux de gaz de dérivation étant, en fonctionnement à charge partielle, dérivé du mélange gazeux réactif entre le réchauffeur (3) et le convertisseur d'ammoniac (4).

5. Procédé selon l'une des revendications 1 à 4, **caractérisé en ce que** le mélange gazeux de sortie du convertisseur d'ammoniac (4) traverse un surchauffeur à vapeur (5), le flux de gaz de dérivation étant, en fonctionnement à charge partielle, introduit dans le mélange gazeux de sortie entre le convertisseur d'ammoniac (4) et le surchauffeur à vapeur (5).

6. Procédé selon l'une des revendications 1 à 4, **caractérisé en ce que** le mélange gazeux de sortie du convertisseur d'ammoniac (4) traverse d'abord un surchauffeur de vapeur (5), puis une chaudière de récupération (6), le flux de gaz de dérivation étant, en fonctionnement à charge partielle, injecté dans le mélange gazeux de sortie entre le surchauffeur de vapeur (5) et la chaudière de récupération (6).

7. Procédé selon l'une des revendications 1 à 4, **caractérisé en ce que** le mélange gazeux de sortie sortant du convertisseur d'ammoniac (4) passe à travers une chaudière à récupération de chaleur (6), puis à travers un échangeur de chaleur gaz-gaz (2), dans lequel, en fonctionnement à charge partielle, le flux de gaz de dérivation est introduit dans le mélange gazeux de sortie entre la chaudière à récupération de chaleur (6) et l'échangeur de chaleur gaz-gaz (2).

8. Procédé selon la revendication 1, **caractérisé en ce que** le mélange gazeux réactif est préchauffé au moyen d'un échangeur de chaleur gaz-gaz (2), dans lequel l'échangeur de chaleur gaz-gaz (2) assure un transfert de chaleur du mélange gazeux produit vers le mélange gazeux réactif sortant du circulateur (1) et le mélange gazeux réactif préchauffé au moyen de l'échangeur de chaleur gaz-gaz (2) est chauffé au moyen d'un dispositif de chauffage (3), le flux de gaz de dérivation étant, en fonctionnement à charge partielle, dérivé du mélange gazeux réactif entre l'échangeur de chaleur gaz-gaz (2) et le réchauffeur (3) ; et **en ce que** le mélange gazeux produit sortant du convertisseur d'ammoniac (4) passe d'abord à travers un surchauffeur de vapeur (5), puis à travers une chaudière à récupération de chaleur (6), puis à travers un échangeur de chaleur gaz-gaz (2), dans lequel, en fonctionnement à charge partielle, le flux de gaz de dérivation est introduit dans le mélange gazeux produit entre la chaudière à récupération de chaleur (6) et l'échangeur de chaleur gaz-gaz (2).

9. Procédé selon l'une des revendications 1 à 4, **caractérisé en ce que** le mélange gazeux de produit est refroidi au moyen d'un échangeur de chaleur gaz-gaz (2), puis au moyen d'un refroidisseur de gaz (7), l'échangeur de chaleur gaz-gaz (2) assurant un transfert de chaleur du flux de gaz produit vers le flux de gaz réactif, le flux de gaz de dérivation étant, en fonctionnement à charge partielle, introduit dans le mélange gazeux produit entre l'échangeur de chaleur gaz-gaz (2) et le refroidisseur de gaz (7).

10. Procédé selon l'une des revendications 1 à 4, **caractérisé en ce que** le mélange gazeux produit est d'abord refroidi au moyen d'un refroidisseur de gaz (7), puis au moyen d'un échangeur de réfrigération (8), l'échangeur de réfrigération (8) assurant un transfert de chaleur du mélange gazeux produit vers un mélange gazeux acheminé vers le circulateur, le flux de gaz de dérivation étant, en fonctionnement à charge partielle, introduit dans le mélange gazeux produit entre le refroidisseur de gaz (7) et l'échangeur de réfrigération (8).

11. Procédé selon la revendication 1, **caractérisé en ce que** le mélange gazeux réactif est préchauffé au moyen d'un échangeur de chaleur gaz-gaz (2), dans lequel l'échangeur de chaleur gaz-gaz (2) assure un transfert de chaleur du mélange gazeux produit vers le mélange gazeux réactif sortant du circulateur (1), le flux de gaz de dérivation étant dérivé du mélange gazeux réactif entre le circulateur (1) et l'échangeur de chaleur gaz-gaz (2) en fonctionnement à charge partielle ; et **en ce que** le mélange gazeux produit est d'abord refroidi au moyen d'un refroidisseur de gaz (7), puis au moyen d'un échangeur de réfrigération (8), l'échangeur de réfrigération (8) assurant un transfert de chaleur du mélange gazeux produit vers un mélange gazeux fourni au circulateur, le flux de gaz de dérivation étant, en fonctionnement à charge partielle, fourni au mélange gazeux produit entre le refroidisseur de gaz (7) et l'échangeur de réfrigération (8).

12. Procédé selon l'une des revendications 1 à 4, **caractérisé en ce que** le mélange gazeux produit est d'abord refroidi au moyen d'un échangeur de réfrigération (8), puis au moyen d'un refroidisseur (9), l'échangeur de réfrigération (8) assurant un transfert de chaleur du mélange gazeux produit vers un mélange gazeux acheminé vers le circulateur (1), le flux de gaz de dérivation étant, en fonctionnement à charge partielle, introduit dans le mélange gazeux produit entre l'échangeur de réfrigération (8) et le refroidisseur (9).

13. Procédé selon l'une des revendications 1 à 4, **caractérisé en ce que** le mélange gazeux produit est d'abord refroidi au moyen d'un premier refroidisseur (9), puis au moyen d'un deuxième refroidisseur (10), le flux de gaz de dérivation étant, en fonctionnement à charge partielle, introduit dans le mélange gazeux produit entre le premier refroidisseur (9) et le deuxième refroidisseur (10).

14. Procédé selon l'une des revendications 1 à 4, **caractérisé en ce que** le mélange gazeux produit est refroidi au moyen d'un refroidisseur (10), puis acheminé vers un séparateur (11), le flux de gaz de dérivation étant, en fonctionnement à charge partielle, introduit dans le mélange gazeux produit entre le refroidisseur (10) et le séparateur (11).

15. Procédé selon la revendication 1, **caractérisé en ce que** le mélange gazeux de réactifs est préchauffé au moyen d'un échangeur de chaleur gaz-gaz (2), dans lequel l'échangeur de chaleur gaz-gaz (2) assure un transfert de chaleur du mélange gazeux produit vers le mélange gazeux réactif sortant du circulateur (1), dans lequel, en fonctionnement à charge partielle, le flux de gaz de dérivation est dérivé du mélange gazeux réactif entre le circulateur (1) et l'échangeur de chaleur gaz-gaz (2) ; et **en ce que** le mélange gazeux produit est refroidi au moyen d'un refroidisseur (10) puis acheminé vers un séparateur (11), le flux de gaz de dérivation étant, en fonctionnement à charge partielle, acheminé vers le mélange gazeux produit entre le refroidisseur (10) et le séparateur (11).

16. Dispositif (100) destiné à la synthèse d'ammoniac, comprenant:
- un dispositif d'alimentation (50) destiné à fournir de l'hydrogène et de l'azote;
- un circuit de synthèse d'ammoniac (20) comprenant
un convertisseur d'ammoniac (4) destiné à la synthèse catalytique d'ammoniac, dans lequel un mélange gazeux de réactifs peut être fourni au convertisseur d'ammoniac (4) et un mélange gazeux de produits peut être évacué du convertisseur d'ammoniac (4);
un circulateur (1) destiné à fournir un mélange gazeux de réactifs contenant de l'hydrogène et de l'azote au convertisseur d'ammoniac (4) ; et
un séparateur (11) destiné à séparer l'ammoniac d'un mélange gazeux de produits provenant du convertisseur d'ammoniac (4);
dans lequel le circuit de synthèse d'ammoniac (20) est configuré pour fonctionner en régime de pleine charge, dans lequel un débit nominal d'hydrogène est fourni au circuit de synthèse d'ammoniac (20), et
dans lequel le circuit de synthèse d'ammoniac (20) est configuré pour fonctionner en régime de charge partielle, dans lequel un débit d'hydrogène est fourni au circuit de synthèse d'ammoniac (20), qui est inférieur au débit nominal,
dans lequel le circuit de synthèse d'ammoniac (20) comprend une dérivation pour acheminer un flux de gaz de dérivation en fonctionnement à charge partielle, dans lequel la dérivation est agencée de telle sorte que le flux de gaz de dérivation puisse être dérivé du mélange gazeux de réactifs entre le circulateur (1) et le convertisseur d'ammoniac (4) et puisse être fourni au mélange gazeux de produits entre le convertisseur d'ammoniac (4) et le séparateur (11).
